# EUROPEAN PATENT APPLICATION

(11) **EP 0 776 863 A1**
(43) Date of publication of application: **04.06.1997**
(21) Application number: 96308613.7
(22) Date of filing: 28.11.1996
(51) Int. Cl.: C02F 3/12, C02F 3/10, C02F 3/30

(54) **Activated sludge treatment process and apparatus**

(30) Priority: 29.11.1995 GB 9524404
(71) Applicant: ANGLIAN WATER SERVICES LTD., Huntingdon, Cambs. PE18 6NZ (GB)
(72) Inventor: Strickland, Jonathan Edward Tully, Milton, Cambridge CB4 6EB (GB)
(74) Representative: Perry, Robert Edward

(57) **Abstract**

An activated sludge treatment system comprises an active sludge aeration tank (6) and, upstream of the aeration tank (6), a moving bed biofilm reactor (1).

The moving bed preferably consists of discrete buoyant pieces of plastics material.

## Description

### Field of the Invention

This invention relates to the treatment of sewage by an activated sludge process, and to apparatus for use in such treatment.

### Background of the Invention

It is standard practice to treat sewage by retaining it in an aeration tank, with activated sludge, where it undergoes microbiological oxidation, to give clarified effluent and further activated sludge. Depending on the circumstances, it may often be necessary to allow the activated sludge to nitrify. The growth of nitrifying bacteria is a rate-limiting step. It would be desirable to reduce the residence time in an aeration tank, i.e. to reduce "sludge age", i.e. the ratio of sludge mass under aeration to the sludge mass that is wasted.

Daigger *et al,* Water Environment Research 65(6):750-758 (1993), describe nitrification in a system comprising coupled trickling filter/activated sludge processes. Some nitrification occurs in the trickling filter, leading to reduced ammonia-nitrogen loading on a downstream suspended growth unit. In addition, nitrifying bacteria grown on the trickling filter pass into the growth unit, allowing the latter to nitrify at solids residence times that would otherwise preclude nitrification. However, the trickling filter involves the establishment of a thick film of sludge, which is highly loaded. The thick film probably contains, in addition to a surface layer undergoing aerobic digestion, anoxic and possibly also anaerobic layers.

### Summary of the Invention

The present invention is based on the discovery that the sludge age of nitrified activated sludge can be dramatically reduced by pre-treatment in a moving bed biofilm reactor (MBBR). In the novel coupling of MBBR and an activated sludge aeration and clarifier system, but without wishing to be bound by theory, the MBBR apparently removes most of the biological oxidation demand (BOD) from the waste water input; this makes it possible for the activated sludge stage to carry out nitrification only. This occurs without the formation of a highly-loaded thick film, but rather with a thin, active film that has little or no anoxic/anaerobic material.

The invention provides effective, economic sewage treatment. It is of value in new systems and is also adaptable to the retrofitting of existing plants which become overloaded and/or where treatment criteria become more stringent, e.g. where nitrification becomes necessary.

### Brief Description of the Drawings

This invention will be described by way of example only with reference to the accompanying drawings, in which:
Figure 1 is a schematic representation of apparatus that is a first embodiment of the present invention;
Figure 2 is a schematic representation of apparatus that is one or more further embodiments of the present invention; and
Figure 3 is a schematic view through a moving bed biofilm reactor that is suitable for use in the present invention.

### Description of the Invention

The apparatus and method of this invention are essentially conventional, in activated sludge treatment, except for the MBBR. In a moving bed biofilm reactor, the biomass grows on small carrier elements that move along with the water in the reactor. The movement is caused by aeration in an aerobic version of the reactor, and by a mechanical stirrer in an anoxic/anaerobic version. The reactor provides high specific biofilm surface, insignificant headloss through the system, and no need for backwashing or recycling the biomass.

Preferably, the MBBR comprises a tank which, in addition to an inlet and an outlet for the sewage under treatment, comprises an inlet for oxygen (or air containing oxygen) to be introduced under pressure. Within the reactor, a buoyant medium is present, providing surfaces on which microbial growth can occur; agitation of the elements controls biomass which allows good oxygen penetration. The medium preferably comprises discrete pieces of, say, plastics material, which preferably include an internal surface, such that solids are not removed by attrition between the pieces. An especially suitable material of this type is known as "Kaldnes" medium, and is described in detail in EP-A-0575314. Each carrier element of this medium is a plastic cylinder with cross-shaped dividers on its inside and longitudinal fins on the outside. The plastic cylinders are, for example, 9 mm in diameter and 7 mm long. They may be made from high density polyethylene, and have a specific weight between 0.92 and 0.96 kg/m³. As the carrier elements are lighter then water, the mixing is provided by air being blown into the reactor. In the case of anoxic or anaerobic reactors, a mechanical stirrer or propeller is used to keep the waste water and carrier elements moving.

The effective (i.e. inner) surface area of the elements is 500 m²/m³ in bulk. The total surface area for a Kaldnes element is much higher but, because of abrasion between the carrier elements when mixed, the bacterial growth is much weaker on the outer surfaces and is therefore not taken into account. The maximum percentage of carrier elements to an empty reactor volume is 70% which corresponds to a effective surface area of 350 m²/m³ of reactor. In the case where the reactor is filled to 50%, this gives an effective biofilm area of 250 m²/m³.

It is preferred that a fraction of settled sludge (obtained in a settlement zone) is recycled back in order to feed the activated sludge with microorganisms, especially nitrifiers, in order to maintain nitrification, whereas the remainder of the solids are wasted. The fraction of the solids which are wasted determines the average amount of time that a microorganism will spend in the reactor. This defined the sludge age and is expressed as the (total solids in reactor)/(total solids wasted).

One preference is for sludge recycle to the activated sludge zone itself. Another preference is for recycle to the MBBR, in which case it is preferred to include an anoxic zone (with or without buoyant medium) prior to the MBBR. In an anoxic zone, wastewater and activated sludge mix, allowing denitrification and the encouragement of good sludge settlement properties. Choice between these alternatives may depend on, *inter alia,* the configuration of any existing plant and the desired degree of denitrification.

The skilled man will be able to determine appropriate loading of the MBBR, according to the desired sludge properties. Depending on circumstances, loading may be changed. For example, the level of loading may be raised if clarification causes problems. It has been found that a system of this invention can work satisfactorily with a loading in the MBBR stage of 5 kg/m³/day, and a sludge age of 4-5 days, allowing for the sludge yield in the MBBR. Preferably, aeration is to a level of dissolved oxygen of 5 mg/ml, at 10-14°C.

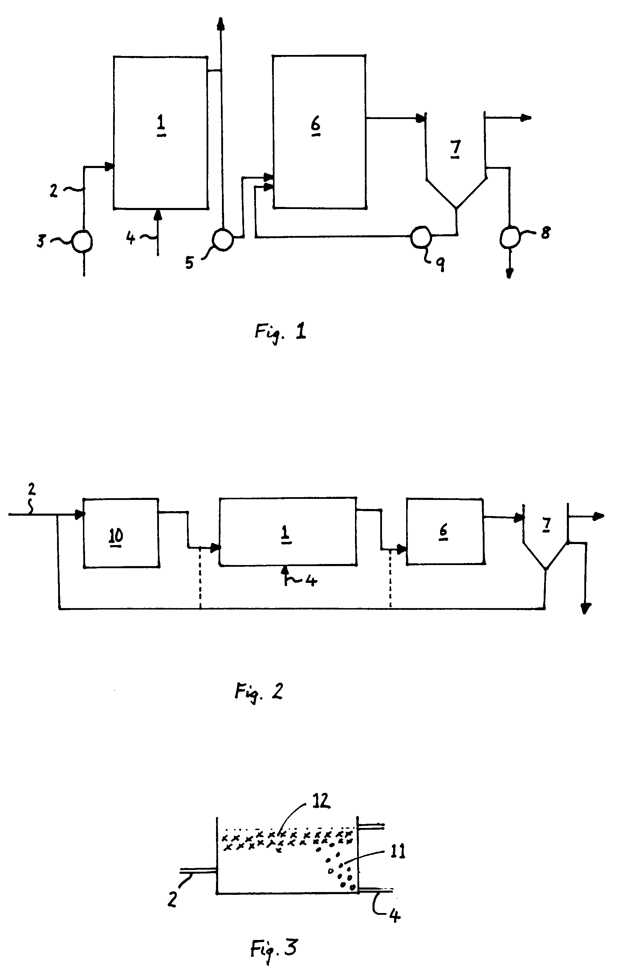

With reference now to the drawings, Fig. 1 shows a vessel 1 having an inlet line 2, controlled by a variable speed pump 3, for settled sewage. The vessel 1 contains buoyant medium (see Fig. 3). An injection inlet 4 is used to introduce air, so that the vessel acts as a moving bed biofilm reactor.

Waste from vessel (MBBR) 1 passes *via* a variable speed pump 5 to a vessel 6 which is an activated sludge treatment stage. Activated sludge passes from the vessel 6 to a settlement tank 7. Waste mixed liquor is removed by means of a variable speed pump 8. Settled sludge can be recirculated to the activated sludge treatment zone in vessel 6 by means of a variable speed pump 9.

Fig. 2 shows a system having various units having the same function, and the same reference numerals, as those shown in Fig. 1 (for simplicity, pumps are not shown). In addition, a vessel 10 is provided for anoxic treatment, prior to the MBBR. A line for recycling activated sludge is shown, leading to the inlet to the vessel 10. Alternative recycling points are shown by dotted lines, and constitute alternative embodiments of the invention.

Fig. 3 shows a MBBR in slightly greater detail, having an inlet line 2 for settled sewage and an inlet 4 for introducing air as bubbles 11. A bed of buoyant particles provides surfaces for biofilm. There is an outlet for liquid to the activated sludge treatment vessel. Below the inlets, solids may settle. A valved outlet for removing solids (not shown) may be provided.

The following Example illustrates the invention.

### Example

Sewage was treated using two vessels each of approximate volume 60 litres, and a pilot-scale settlement tank. The arrangement is shown schematically in Fig. 1 of the accompanying drawings.

One vessel was filled to 50% with plastic media ("Kaldnes"). Settled sewage was pumped to this first vessel at a controlled rate and aerated so as to maintain a dissolved oxygen concentration of 2 mg/l. The effluent from this was split into two streams. One stream was pumped at a controlled rate to the second vessel. The remainder of the flow from the first vessel passed to waste. The second vessel was aerated so as to maintain a dissolved oxygen concentration of 2 mg/l and also received a return sludge from the settlement tank. This second vessel and settlement tank was thus operating as an activated sludge system, with a mixed liquor being maintained at approximately 3.5 g/l. To control the mixed liquor, suspended solids concentration mixed liquor was wasted continuously from the second vessel at a controlled rate.

This arrangement allowed the two vessels to be run at different retention times, independently of each other. Results for a particular run (after allowing the system to reach steady rate) are shown below.

| Day | Ammonia (Settled sewage) | Ammonia (MBBR effluent) | Ammonia (Activated Sludge effluent) | Retention time in MBBR | Retention time in Activated sludge | Sludge Age |
|---|---|---|---|---|---|---|
| | (mg/l) | (mg/l) | (mg/l) | (minutes) | (minutes) | (Days) |
| 1 | 34.4 | 28.4 | 0.80 | 22.9 | 74.3 | 1.8 |
| 2 | 28.8 | 25.3 | 1.46 | 22.9 | 86.7 | 1.8 |
| 3 | 33.2 | 32.9 | 0.82 | 16.0 | 52.0 | 1.2 |
| 4 | 30.7 | 22.2 | 0.54 | 26.7 | 65.0 | 0.9 |
| 5 | 31.4 | 27.7 | 0.94 | 16.6 | 52.0 | 0.9 |
| 6 | 35.2 | 27.3 | 0.61 | 26.7 | 57.8 | 0.9 |

Modification of the conditions has shown that increased sludge age can be desirable, to the currently desired optimum of 4-5 days.

## Claims

1. An activated sludge treatment system comprising an active sludge aeration tank and, upstream of the aeration tank, a moving bed biofilm reactor.

2. A system according to claim 1, in which the reactor comprises a buoyant medium and a forced oxygen supply.

3. A system according to claim 2, in which the medium comprises discrete pieces of plastics material each having an internal surface.

4. A system according to any preceding claim, which additionally comprises a settlement zone for activated sludge.

5. A system according to claim 4, which additionally comprises means for recycling activated sludge.

6. A system according to claim 5, which additionally comprises an anoxic zone prior to the moving bed biofilm reactor, and the recycle is to the anoxic zone.

7. A method of nitrifying activated sludge, which comprises the prior step of passing the sludge through a reactor as defined in any preceding claim.
